# EUROPÄISCHE PATENTSCHRIFT

(11) **EP 3 079 947 B1**
(45) Veröffentlichungstag und Bekanntmachung des Hinweises auf die Patenterteilung: **19.07.2017**
(21) Anmeldenummer: 14796423.3
(22) Anmeldetag: 07.11.2014
(51) Int. Cl.: B60Q 1/14, G06K 9/00

(54) **VERFAHREN ZUM BETREIBEN EINES SCHEINWERFERS FÜR EIN KRAFTFAHRZEUG**
METHOD FOR OPERATING A HEADLIGHT FOR A MOTOR VEHICLE
PROCÉDÉ PERMETTANT DE FAIRE FONCTIONNER UN PHARE DE VÉHICULE À MOTEUR

(30) Priorität: 11.12.2013 DE 102013020754
(43) Veröffentlichungstag der Anmeldung: 19.10.2016
(73) Patentinhaber: Audi AG, 85045 Ingolstadt (DE)
(72) Erfinder: FUNK, Christian, 92339 Beilngries (DE); BARMEYER, Florenz, 02763 Zittau (DE)
(74) Vertreter: Thielmann, Frank
(86) Internationale Anmeldenummer: PCT/EP2014/002994
(87) Internationale Veröffentlichungsnummer: WO 2015/086104

(56) Entgegenhaltungen:
- EP-A2- 2 280 215
- EP-A2- 2 532 552
- EP-A2- 2 567 866
- DE-A1-102006 021 694
- DE-A1-102006 055 908
- DE-A1-102008 032 345
- DE-A1-102011 083 265

## Beschreibung

Die vorliegende Erfindung betrifft ein Verfahren zum Betreiben eines Scheinwerfers für ein Kraftfahrzeug. Überdies betrifft die vorliegende Erfindung einen Scheinwerfer für ein Kraftfahrzeug. Schließlich betrifft die vorliegende Erfindung ein Kraftfahrzeug.

Bisher existiert bei Kraftfahrzeugen im Straßenverkehr zur Beleuchtung der Fahrbahn nur eine Lichtverteilung. Diese ist asymmetrisch ausgeführt, bei Rechtsverkehr auf der linken Hälfte um etwa 1 % vertikal beschnitten, und stellt einen Kompromiss für unterschiedliche Straßenklassen dar. Eine Erweiterung dieser Lichtverteilung stellt das Fernlicht dar, welches die Beleuchtung über den Abblendlichtbereich hinaus darstellt. Aufgrund der Lichtverteilung im Fernlichtbetrieb des Scheinwerfers kann das Fernlicht nur dann aktiviert werden, wenn sich kein anderer Verkehrsteilnehmer im Blendbereich des Scheinwerfers befindet.

In modernen Kraftfahrzeugen werden Scheinwerfer verbaut, die eine Mehrzahl von Leuchtdioden umfassen, die separat oder in Gruppen angesteuert werden können. Zusätzlich können neuartige adaptive Fernlichtsysteme bereitgestellt werden, die den oben beschriebenen Nachteil beheben, indem sie pro horizontalen Winkelbereich bestimmte Leuchtdioden besitzen, die nur diesen Winkelbereich ausleuchten. Wird ein anderer Verkehrsteilnehmer beispielsweise durch eine Kamera am Innenspiegel in diesem Bereich erkannt, werden die Leuchtdioden, die diesem Bereich zugeordnet sind, ausgeschaltet. Der entgegenkommende Verkehrsteilnehmer wird dadurch nicht mehr geblendet.

Derartige Fernlichtverteilungen weisen üblicherweise eine sehr breite Lichtverteilung auf. Diese kann sich beispielsweise über einem Winkelbereich von +/- 20 ° in Bezug zu einer Hauptabstrahlrichtung des Scheinwerfers erstrecken. Dies hat zur Folge, dass es speziell auf Autobahnen oder baulich getrennten Straßen zu einer Blendung des Gegenverkehrs kommen kann. In diesen Situationen können die Scheinwerfer der anderen Verkehrsteilnehmer durch die Kamera teilweise nicht mehr erkannt werden, da sie hinter der Mittelbebauung liegen.

In diesem Zusammenhang beschreibt die DE 20 2010 006 097 U1 ein Lichtmodul für einen Kraftfahrzeugscheinwerfer, der mehrere separat ansteuerbare Leuchtdioden zum Aussenden von elektromagnetischer Strahlung umfasst. Des Weiteren umfasst das Lichtmodul mindestens eine Abbildungsoptik zur Abbildung der von den Leuchtdioden ausgesandten Strahlung auf einer Fahrbahn vor dem Fahrzeug. Mit dem Lichtmodul kann ein Markierungslicht erzeugt werden. Darüber hinaus kann auch eine andere Lichtverteilung, wie beispielsweise ein Fernlicht, ein Stadtlicht, ein Autobahnlicht oder dergleichen bereitgestellt werden.

In der DE 10 2011 109 440 A1 ist ein Verfahren zum Justieren und/oder Kalibrieren zumindest eines Scheinwerfers eines Fahrzeugs beschrieben. Hierbei wird mittels einer Erfassungseinheit eine mittels des zumindest einen Scheinwerfers beleuchteten Fahrzeugumgebung umfasst. In Abhängigkeit davon wird eine horizontale und/oder vertikale Hell-Dunkel-Grenze und eine Abweichung der Hell-Dunkel-Grenze von einem vorgegebenen Sollwert ermittelt und anhand der ermittelten Abweichung der Scheinwerfer kalibriert beziehungsweise justiert.

Des Weiteren beschreibt die DE 10 2011 077 636 A1 ein Lichtmodul eines Kraftfahrzeugs zur Erzeugung einer Spotverteilung einer Fernlicht-Verteilung. Die Spotverteilung ist durch die Überlagerung der Spotverteilung und einer durch mindestens ein anderes Modul erzeugten Grundverteilung gebildet. Somit kann neben dem Abblendlicht und dem Fernlicht situationsabhängig auch eine andere Lichtverteilung, wie beispielsweise ein Stadtlicht, ein Landstraßenlicht, ein Autobahnlicht, ein dynamisches Kurvenlicht oder dergleichen, bereitgestellt werden.

Aus der DE 10 2011 006 073 A1 ist eine Kraftfahrzeugbeleuchtungseinrichtung bekannt, die mehrere nebeneinander angeordnete Lichtmodule umfasst. Hierbei wird mit jedem der Lichtmodule eine Teillichtverteilung erzeugt, wobei alle Teillichtverteilungen unterhalb einer geraden, horizontalen Hell-Dunkel-Grenze liegen und sich die Gesamtlichtverteilung der Beleuchtungseinrichtungen durch die Überlagerung der verschiedenen Teillichtverteilungen ergibt.

Die DE 102 42 864 A1 beschreibt eine automatische Scheinwerfer-Regeleinrichtung für ein Kraftfahrzeug. Die Scheinwerfer-Regeleinrichtung umfasst zumindest einen Scheinwerfer mit einer Lichtquelle, einer mit Sensoren gekoppelten Auswerteelektronik und zumindest einer von mehreren Lichtverteilungen der Lichtquelle einstellbaren Steuerelektronik.

Die DE 10 2006 021 694 A1 beschreibt eine Beleuchtungseinrichtung für ein Kraftfahrzeug. Die Beleuchtungseinrichtung umfasst Module mit LEDs. Durch die Module wird ein Abblendlicht und ein Fernlicht erzeugt. Die Module sind über eine Steuerungseinrichtung zur variablen Erzeugung des Abblendlichts und des Fernlichts ansteuerbar. So kann das Abblendlicht oder das Fernlicht umgebungsabhängig variiert werden.

Die EP 2 567 866 A2 beschreibt ein Verfahren zum Betreiben eines Scheinwerfers eines Kraftfahrzeugs. Der Scheinwerfer umfasst eine Mehrzahl von Leuchtmitteln, wobei beim Einschalten des Scheinwerfers die Leuchtmittel entlang einer Erstreckungsrichtung der Reihe nach eingeschaltet werden. Es können die einzelnen Leuchtmittel des Scheinwerfers in Abhängigkeit von Straßenverhältnissen oder Witterungsverhältnisses eingestellt werden. Es kann ebenso zwischen einer geschlossenen Ortschaft, einer Landstraße oder einer Autobahn unterschieden werden.

Die DE 10 2011 083 265 A1 offenbart ein Verfahren zur Ermittlung des Vorhandenseins einer baulichen Trennung zwischen zwei Fahrbahnen.

Aus den Dokumenten EP 2 030 838 A2 und US 2006/267502 A1 geht jeweils hervor, dass auf der Grundlage einer Bildverarbeitung Fahrbahnmarkierungen erfasst werden und daraus die Fahrbahn ermittelt können, auf welcher sich das Kraftfahrzeug gerade bewegt. Dies wird dazu genutzt, um zu erkennen, ob sich das Kraftfahrzeug auf einer mehrspurigen Straße befindet und in diesem Fall dann eine verbreiterte Lichtverteilung bereitgestellt, um auch benachbarte Fahrbahnen auszuleuchten.

Es ist Aufgabe der vorliegenden Erfindung, ein Verfahren zum Betreiben eines Scheinwerfers eines Kraftfahrzeugs bereitzustellen, durch welches die Sicherheit im Straßenverkehr erhöht werden kann. Überdies soll ein entsprechender Scheinwerfer bereitgestellt werden.

Diese Aufgabe wird durch ein Verfahren mit den Merkmalen des Patentanspruchs 1 und einen Scheinwerfer mit den Merkmalen des Patentanspruchs 9 gelöst. Vorteilhafte Weiterbildungen der vorliegenden Erfindung sind Gegenstand der abhängigen Ansprüche.

Das erfindungsgemäße Verfahren zum Betreiben eines Scheinwerfers eines Kraftfahrzeugs, der eine Mehrzahl von Leuchtdioden umfasst, beinhaltet das Empfangen eines Anforderungssignals für einen Fernlichtbetrieb, das Ermitteln einer Straßenklasse einer Straße, auf der sich das Kraftfahrzeug befindet, das Ansteuern einer ersten Gruppe der Mehrzahl von Leuchtdioden zum Bereitstellen einer ersten Fernlichtverteilung mit dem Scheinwerfer, falls eine von einer Autobahn verschiedene Straßenklasse ermittelt wird, und das Ansteuern einer zweiten Gruppe der Mehrzahl von Leuchtdioden zum Bereitstellen einer zweiten Fernlichtverteilung mit dem Scheinwerfer, falls eine Autobahn als die Straßenklasse ermittelt wird.

Bei dem Verfahren wird ein Anforderungssignal zum Bereitstellen eines Fernlichts empfangen. Ein derartiges Anforderungssignal kann beispielsweise durch die Bedieneingabe eines Fahrers erzeugt werden, der einen Hebel im Kraftfahrzeug betätigt. Alternativ dazu kann das Anforderungssignal durch ein adaptives Fernlichtsystem oder ein Fahrerassistenzsystem erzeugt werden. Des Weiteren wird die Straßenklasse der Straße ermittelt, auf der sich das Kraftfahrzeug momentan befindet. Falls sich das Kraftfahrzeug aktuell auf einer von einer Autobahn verschiedenen Straße befindet, wird eine erste Gruppe von Leuchtdioden angesteuert, so dass diese eine erste Fernlichtverteilung bereitstellen. Falls eine Autobahn oder eine autobahnähnliche Straße als die Straßenklasse ermittelt wird, wird eine zweite Gruppe von Leuchtdioden aktiviert und mit diesen eine zweite Fernlichtverteilung bereitgestellt. Die zweite Fernlichtverteilung kann eine Variante oder Abwandlung der ersten Fernlichtverteilung sein. Die zweite Fernlichtverteilung kann aber auch unabhängig von der ersten Fernlichtverteilung bereitgestellt werden. Die zweite Fernlichtverteilung ist bevorzugt derart ausgebildet, dass die Verkehrsteilnehmer auf den Gegenfahrbahnen der Autobahn weniger geblendet werden. Somit kann die Fernlichtverteilung in Abhängigkeit davon angepasst werden, ob sich der Fahrer auf einer Autobahn befindet oder nicht. Damit kann dem Fahrer auch bei der Fahrt auf einer Autobahn eine Fernlichtverteilung zur Verfügung gestellt werden, wodurch die Sichtverhältnisse verbessert werden.

Falls eine Autobahn als Straßenklasse ermittelt wird, wird zusätzlich ermittelt, auf welcher Fahrspur der Autobahn sich das Kraftfahrzeug befindet und die zweite Gruppe der Mehrzahl von Leuchtdioden, die zum Bereitstellen der zweiten Fernlichtverteilung angesteuert wird, wird in Abhängigkeit von der ermittelten Fahrspur angepasst. Je nachdem, auf welcher Fahrbahn sich das Kraftfahrzeug auf einer mehrspurigen Autobahn befindet, kann die zweite Fernlichtverteilung entsprechend angepasst werden. Beispielsweise kann die zweite Fernlichtverteilung derart eingestellt werden, dass die übrigen Fahrzeuge auf den anderen Fahrbahnen nicht geblendet werden. Somit kann die Sicherheit im Straßenverkehr erhöht werden.

Die erste und/oder die zweite Gruppe der Mehrzahl von Leuchtdioden werden derart angesteuert, dass die Leuchtdioden, die einem Randbereich des Scheinwerfers zugeordnet sind, deaktiviert werden, so dass mit der zweiten Fernlichtverteilung im Vergleich zur ersten Fernlichtverteilung eine schmalere Lichtverteilung bereitgestellt wird, die zur Folge hat, dass Verkehrsteilnehmer auf entgegengesetzten Richtungsfahrbahnen der Autobahn nicht geblendet werden und es dem Fahrer des Kraftfahrzeugs deshalb weiterhin möglich ist, das Fernlicht auf der Autobahn zu aktivieren. Somit kann erreicht werden, dass andere Verkehrsteilnehmer nicht geblendet werden.

Bevorzugt werden die erste und die zweite Gruppe der Mehrzahl von Leuchtdioden derart angesteuert, dass sich die erste und die zweite Fernlichtverteilung entlang eines Winkelbereichs um eine Hauptabstrahlrichtung des Scheinwerfers erstrecken, wobei der Winkelbereich der zweiten Fernlichtverteilung im Vergleich zum Winkelbereich der ersten Fernlichtverteilung kleiner ist. Zu diesem Zweck können beispielsweise Leuchtdioden, die einem Randbereich des Scheinwerfers zugeordnet sind, bei der zweiten Fernlichtverteilung nicht aktiviert werden. Damit ergibt sich eine schmalere Lichtverteilung bei der zweiten Fernlichtverteilung. Dies hat zur Folge, dass die Verkehrsteilnehmer auf den anderen Richtungsfahrbahnen der Autobahn nicht geblendet werden.

Bevorzugt wird die Straßenklasse der Straße, auf der sich das Kraftfahrzeug befindet, anhand der Geschwindigkeit des Kraftfahrzeugs ermittelt. Wenn das Kraftfahrzeug eine vorbestimmte Mindestgeschwindigkeit für eine bestimmte Zeit überschreitet, kann davon ausgegangen werden, dass sich auf Kraftfahrzeug auf einer Autobahn oder auf einer autobahnähnlichen Straße fortbewegt. Somit kann die Straßenklasse, auf der sich das Kraftfahrzeug momentan befindet, auf einfache Weise bestimmt werden.

In einer weiteren Ausführungsform wird die Straßenklasse der Straße, auf der sich das Kraftfahrzeug befindet, anhand der Daten eines Navigationssystems ermittelt. Die Position des Kraftfahrzeugs kann beispielsweise anhand der Daten eines satellitengestützten Ortungssystems bestimmt werden. Diese Daten können mit einer digitalen Karte abgeglichen werden. In der digitalen Karte können Informationen bezüglich der Straßenklasse hinterlegt sein. Somit kann die Straßenklasse, auf der sich das Kraftfahrzeug momentan befindet, zuverlässig ermittelt werden.

In einer weiteren Ausgestaltung wird, falls eine Autobahn als Straßenklasse ermittelt wird, zusätzlich eine bauliche Trennung zwischen den Richtungsfahrbahnen der Autobahn erkannt, und die zweite Gruppe der Mehrzahl von Leuchtdioden, die zum Bereitstellen der zweiten Fernlichtverteilung angesteuert wird, wird in Abhängigkeit von der erkannten baulichen Trennung angepasst. Hierbei kann ermittelt werden, ob eine bauliche Trennung zwischen den Richtungsfahrbahnen vorhanden ist oder nicht. Alternativ oder zusätzlich kann erkannt werden, wie diese bauliche Trennung ausgebildet ist. Hierbei kann insbesondere ermittelt werden, ob bei der baulichen Trennung die Möglichkeit besteht, dass der Gegenverkehr geblendet wird. Zu diesem Zweck können beispielsweise die Daten einer Kamera oder die Daten eines Navigationssystems genutzt werden. In Abhängigkeit von der erkannten baulichen Trennung können die Leuchtdioden für die zweite Gruppe ausgewählt werden. Damit kann die zweite Fernlichtverteilung in Abhängigkeit von der baulichen Trennung zwischen den Richtungsfahrbahnen angepasst werden.

Bevorzugt wird die Fahrspur, auf der sich das Kraftfahrzeug befindet, anhand von Fahrbahnmarkierungen mittels einer Kamera ermittelt. Mit einer Kamera können die Begrenzungslinien zwischen den einzelnen Fahrspuren und die äußeren Begrenzungslinien erkannt werden. Dazu können zusätzlich die Daten eines Navigationssystems herangezogen werden. Somit kann die Position des Kraftfahrzeugs bezüglich der einzelnen Fahrspuren zuverlässig ermittelt werden.

Der erfindungsgemäße Scheinwerfer für ein Kraftfahrzeug umfasst eine Mehrzahl von Leuchtdioden, eine Steuereinrichtung zum Empfangen eines Anforderungssignals für einen Fernlichtbetrieb, eine Erfassungseinrichtung zum Ermitteln einer Straßenklasse einer Straße, auf der sich das Kraftfahrzeug befindet, wobei die Steuereinrichtung eine erste Gruppe der Mehrzahl von Leuchtdioden zum Bereitstellen einer ersten Fernlichtverteilung ansteuert, falls eine von einer Autobahn verschiedene Straßenklasse ermittelt wird, und die Steuereinrichtung eine zweite der Mehrzahl von Leuchtdioden zum Bereitstellen einer zweiten Fernlichtverteilung ansteuert, falls eine Autobahn als die Straßenklasse ermittelt ist. Der Scheinwerfer ist dabei dazu ausgebildet, ein Verfahren nach einer der oben beschriebenen Ausführungsformen auszuführen.

Das erfindungsgemäße Kraftfahrzeug umfasst zumindest einen erfindungsgemäßen Scheinwerfer. Bevorzugt umfasst das Kraftfahrzeug zwei der erfindungsgemäßen Scheinwerfer.

Die zuvor im Zusammenhang mit dem erfindungsgemäßen Verfahren beschriebenen Vorteile und Weiterbildungen gelten sinngemäß für den erfindungsgemäßen Scheinwerfer und das erfindungsgemäße Kraftfahrzeug.

Vorliegende Erfindung wird nun anhand der beigefügten Zeichnungen näher erläutert. Dabei zeigen:
- Fig. 1: eine schematische Darstellung eines Kraftfahrzeugs, das sich auf einer Fahrspur einer Autobahn befindet;
- Fig. 2: Dimmwerte von Leuchtdioden eines Scheinwerfers des Kraftfahrzeugs in Abhängigkeit von einen Winkelbereich für eine erste Fernlichtverteilung; und
- Fig. 3: die Dimmwerte der Leuchtdioden des Scheinwerfers des Kraftfahrzeugs in Abhängigkeit von dem Winkelbereich für eine zweite Fernlichtverteilung.

Die nachfolgend näher geschilderten Ausführungsbeispiele stellen bevorzugte Ausführungsformen der vorliegenden Erfindung dar.

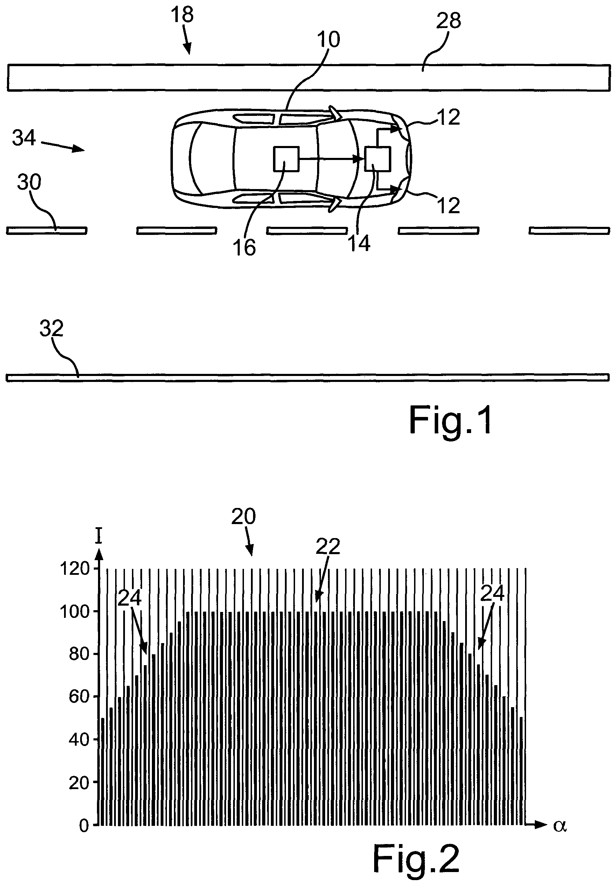

Fig. 1 zeigt eine schematische Darstellung eines Kraftfahrzeugs 10 in einer Draufsicht. Das Kraftfahrzeug 10 umfasst zwei Scheinwerfer 12. Die Scheinwerfer 12 umfassen jeweils eine Mehrzahl von Leuchtdioden. Dabei können die einzelnen Leuchtdioden innerhalb des Scheinwerfers 12 matrixartig angeordnet sein. Das heißt, die Leuchtdioden können innerhalb des Scheinwerfers 12 in mehreren Reihen übereinander angeordnet sein. Des Weiteren umfasst das Kraftfahrzeug 10 eine Steuereinrichtung 14, mit der die Leuchtdioden der Scheinwerfer 12 einzeln oder in Gruppen angesteuert werden können. Mit der Steuereinrichtung 14 können die Leuchtdioden so angesteuert werden, dass mit den Scheinwerfern 12 eine Abblendlichtverteilung oder eine Fernlichtverteilung bereitgestellt wird.

Die Steuereinrichtung 14 des Kraftfahrzeugs 10 ist dazu ausgebildet, ein Anforderungssignal für einen Fernlichtbetrieb zu empfangen. Ein solches Anforderungssignal kann beispielsweise durch eine Bedieneingabe eines Fahrers bereitgestellt werden. Darüber hinaus kann ein solches Anforderungssignal von einem Fahrerassistenzsystem bereitgestellt werden. Des Weiteren umfasst das Kraftfahrzeug 10 eine Erfassungseinrichtung 16. Mit der Erfassungseinrichtung 16 kann eine Straßenklasse ermittelt werden, auf der sich das Kraftfahrzeug 10 momentan befindet. Zu diesem Zweck kann die Erfassungseinrichtung 16 die Daten eines hier nicht dargestellten Navigationssystems heranziehen. Alternativ dazu kann die Erfassungseinrichtung 16 Daten von einem Geschwindigkeitssensor des Kraftfahrzeugs 10 empfangen. Mit der Erfassungseinrichtung 16 kann ermittelt werden, ob sich das Kraftfahrzeug 10 auf einer Autobahn 18 befindet oder nicht. In dem vorliegenden Ausführungsbeispiel befindet sich das Kraftfahrzeug 10 auf einer Autobahn 18.

Wenn mit der Erfassungseinrichtung 16 ermittelt wird, dass sich das Kraftfahrzeug 10 nicht auf einer Autobahn 18 befindet, können die einzelnen Leuchtdioden der Scheinwerfer 12 so angesteuert werden, dass mit diesen eine erste Fernlichtverteilung 20 bereitgestellt wird. Eine solche erste Fernlichtverteilung 20 ist in Fig. 2 dargestellt. Das Diagramm in Fig. 2 zeigt auf der Abszisse einen Winkelbereich α und auf der Ordinate jeweilige Dimmwerte I der Leuchtdioden oder Gruppen von Leuchtdioden des Scheinwerfers 12. Ein Dimmwert I von 100 entspricht der maximalen Beleuchtungsstärke der Leuchtdioden. Bei der vorliegenden ersten Fernlichtverteilung 20 werden die Leuchtdioden in einem mittleren Bereich 22 so betrieben, dass sie die maximale Beleuchtungsstärke bereitstellen. Dieser mittlere Bereich 22 ist dem Bereich der Hauptabstrahlrichtung des Scheinwerfers 12 zugeordnet. Die Leuchtdioden, die den beiden Randbereichen 24 des Scheinwerfers 12 zugeordnet sind, werden im Vergleich zu den Leuchtdioden, die sich im mittleren Bereich 22 des Scheinwerfers 12 befinden, so angesteuert, dass sie eine geringere Beleuchtungsstärke bereitstellen. Zu diesem Zweck können die Leuchtdioden, beispielsweise mittels Pulsweitenmodulation, gedimmt betrieben werden.

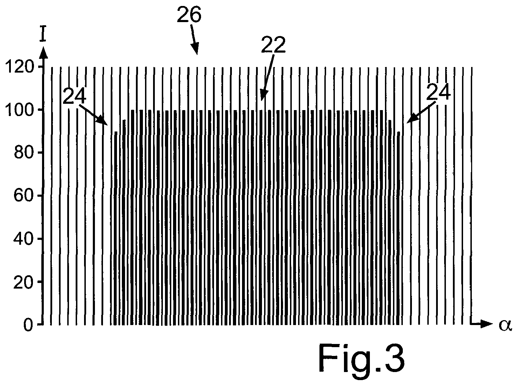

Fig. 3 zeigt eine zweite Fernlichtverteilung 26. Eine derartige Fernlichtverteilung 26 wird durch die Leuchtdioden der Scheinwerfer 12 bereitgestellt, wenn mit der Erfassungseinrichtung 16 ermittelt wird, dass sich das Kraftfahrzeug 10 auf einer Autobahn 18 befindet. Bei der vorliegenden zweiten Fernlichtverteilung 26 werden die Leuchtdioden im mittleren Bereich 22 weiterhin mit der maximalen Beleuchtungsstärke betrieben. Die Leuchtdioden in den Randbereichen 24 sind im Vergleich zur ersten Fernlichtverteilung 20 bereichsweise deaktiviert. Somit wird mit der zweiten Fernlichtverteilung 26 im Vergleich zur ersten Fernlichtverteilung 20 eine schmalere Lichtverteilung bereitgestellt. Dies hat zur Folge, dass die Verkehrsteilnehmer auf den entgegengesetzten Richtungsfahrbahnen der Autobahn 18 nicht geblendet werden. Dem Fahrer wird weiterhin die Möglichkeit geboten, das Fernlicht auf der Autobahn 18 zu aktivieren, um dem Fahrer bessere Sichtverhältnisse zu gewährleisten.

Die Erfassungseinrichtung 16 ist weiterhin dazu ausgebildet, eine bauliche Trennung 28, die die Richtungsfahrbahnen auf der Autobahn 18 voneinander trennt, zu erfassen. Zu diesem Zweck kann die Erfassungseinrichtung 16 eine entsprechende Kamera umfassen. Mit dieser Kamera kann die Art der baulichen Trennung 28 ermittelt werden. So kann beispielsweise festgestellt werden, ob die Gefahr besteht, dass die Verkehrsteilnehmer auf den entgegengesetzten Richtungsfahrbahnen geblendet werden. In Abhängigkeit von der erfassten baulichen Trennung 28 kann die zweite Fernlichtverteilung 26 angepasst werden. Beispielsweise können zusätzlich Leuchtdioden in den Randbereichen 24 gedimmt oder deaktiviert werden. Alternativ dazu können zusätzliche Leuchtdioden aktiviert oder mit einer mit einer höheren Beleuchtungsstärke betrieben werden.

Darüber hinaus ist die Erfassungseinrichtung 16 dazu ausgebildet zu ermitteln, auf welcher Fahrspur 34 der Autobahn 18 sich das Kraftfahrzeug 10 momentan befindet. Zu diesem Zweck kann die Erfassungseinrichtung 16 eine Kamera umfassen, mit der die Fahrspurmarkierungen 30, 32 erfasst werden können. In dem vorliegenden Ausführungsbeispiel befindet sich das Kraftfahrzeug auf der linken Fahrbahn 34 der Autobahn 18. In Abhängigkeit von der ermittelten Fahrspur 34 kann die zweite Fernlichtverteilung 26 entsprechend angepasst werden. Somit kann verhindert werden, dass die übrigen Verkehrsteilnehmer geblendet werden.

## Patentansprüche

1. Verfahren zum Betreiben eines Scheinwerfers (12) für ein Kraftfahrzeug (10), der eine Mehrzahl von Leuchtdioden umfasst, durch
- Empfangen eines Anforderungssignals für einen Fernlichtbetrieb,
- Ermitteln einer Straßenklasse einer Straße, auf der sich das Kraftfahrzeug (10) befindet,
- Ansteuern einer ersten Gruppe der Mehrzahl von Leuchtdioden zum Bereitstellen einer ersten Fernlichtverteilung (20) mit dem Scheinwerfer (12), falls eine von einer Autobahn (18) verschiedene Straßenklasse ermittelt wird, und
- Ansteuern einer zweiten Gruppe der Mehrzahl von Leuchtdioden zum Bereitstellen einer zweiten Fernlichtverteilung (26) mit dem Scheinwerfer (12), falls eine Autobahn (18) als die Straßenklasse ermittelt wird,
**dadurch gekennzeichnet, dass**
die zweite Gruppe der Mehrzahl von Leuchtdioden angesteuert wird, indem Leuchtdioden, die den beiden Randbereichen (24) des Scheinwerfers (12) zugeordnet sind, deaktiviert werden, so dass mit der zweiten Fernlichtverteilung (26) im Vergleich zur ersten Fernlichtverteilung (20) eine schmalere Lichtverteilung bereitgestellt wird, die zur Folge hat, dass Verkehrsteilnehmer auf entgegengesetzten Richtungsfahrbahnen der Autobahn (18) nicht geblendet werden und es dem Fahrer des Kraftfahrzeugs (10) deshalb weiterhin möglich ist, das Fernlicht auf der Autobahn (18) zu aktivieren, wobei falls eine Autobahn (18) als Straßenklasse ermittelt wird, zusätzlich ermittelt wird, auf welcher Fahrspur (34) der Autobahn (18) sich das Kraftfahrzeug (10) befindet, und die zweite Gruppe der Mehrzahl von Leuchtdioden, die zum Bereitstellen der zweiten Fernlichtverteilung (26) angesteuert wird, in Abhängigkeit von der ermittelten Fahrspur (34) angepasst wird.

2. Verfahren nach Anspruch 1,
**dadurch gekennzeichnet, dass**
die erste und die zweite Gruppe der Mehrzahl von Leuchtdioden derart angesteuert werden, dass sich die erste und die zweite Fernlichtverteilung (26) entlang eines Winkelbereichs (α) um eine Hauptabstrahlrichtung des Scheinwerfers (12) erstrecken, wobei der Winkeibereich (α) der zweiten Fernlichtverteilung (26) im Vergleich zum Winkelbereich (α) der ersten Fernlichtverteilung (20) kleiner ist.

3. Verfahren nach Anspruch 1 oder 2,
**dadurch gekennzeichnet**, das
die Straßenklasse der Straße, auf der sich das Kraftfahrzeug (10) befindet, anhand der Geschwindigkeit des Kraftfahrzeugs (10) ermittelt wird.

4. Verfahren nach einem der vorhergehenden Ansprüche,
**dadurch gekennzeichnet, dass**
die Straßenklasse der Straße, auf der sich das Kraftfahrzeug (10) befindet, anhand der Daten eines Navigationssystems ermittelt wird.

5. Verfahren nach einem der vorhergehenden Ansprüche,
**dadurch gekennzeichnet, dass**
falls eine Autobahn (18) als Straßenklasse ermittelt wird, zusätzlich eine bauliche Trennung (28) zwischen den Richtungsfahrbahnen der Autobahn (18) erkannt wird und die zweite Gruppe der Mehrzahl von Leuchtdioden, die zum Bereitstellen der zweiten Fernlichtverteilung (26) angesteuert wird, in Abhängigkeit von der erkannten baulichen Trennung (28) angepasst wird.

6. Verfahren nach Anspruch 5,
**dadurch gekennzeichnet, dass**
die Fahrspur (34), auf der sich das Kraftfahrzeug (10) befindet, anhand von Fahrbahnmarkierungen mittels einer Kamera ermittelt wird.

7. Scheinwerfer (12) für ein Kraftfahrzeug (10) mit
- einer Mehrzahl von Leuchtdioden,
- einer Steuereinrichtung (14) zum Empfangen eines Anforderungssignals für einen Fernlichtbetrieb,
- einer Erfassungseinrichtung (16) zum Ermitteln einer Straßenklasse einer Straße, auf der sich das Kraftfahrzeug (10) befindet, wobei
- die Steuereinrichtung (14) eine ersten Gruppe der Mehrzahl von Leuchtdioden zum Bereitstellen einer ersten Fernlichtverteilung (20) ansteuert, falls eine von einer Autobahn (18) verschiedene Straßenklasse ermittelt ist, und
- die Steuereinrichtung (14) eine zweite Gruppe der Mehrzahl von Leuchtdioden zum Bereitstellen einer zweiten Fernlichtverteilung (26) ansteuert, falls eine Autobahn (18) als die Straßenklasse ermittelt ist, wobei der Scheinwerfer dazu ausgebildet ist, ein Verfahren nach einem der vorhergehenden Ansprüche auszuführen.

8. Kraftfahrzeug (10) mit zumindest einem Scheinwerfer (12) nach Anspruch 7.

## Claims

1. Method for operating a headlamp (12) for a motor vehicle (10) comprising a plurality of light diodes by
- receiving a request signal for a full beam operation,
- determining a street class of a street on which the motor vehicle (10) is located,
- actuating a first group of the plurality of light diodes to provide a first high beam distribution (20) using the headlamp (12), if a street class different from a motorway (18) is determined, and
- actuating a second group of the plurality of light diodes to provide a second high beam distribution (26) using the headlamp (12), if a motorway (18) is determined as the street class,
**characterised in that**
the second group of the plurality of light diodes is actuated **in that** light diodes, associated with the two edge regions (24) of the headlamp (12), are deactivated such that a narrower light distribution is provided with the second high beam distribution (26) compared to the first high beam distribution (20) which results in road users on opposing carriageways of the motorway (18) not being dazzled and it therefore still being possible for the driver of the motor vehicle (10) to activate the high beam on the motorway (18) wherein if a motorway (18) is determined as the street class, it is also determined on which lane (34) of the motorway (18) the motor vehicle (10) is located and the second group of the plurality of light diodes, which is actuated to provide the second high beam distribution (26), is adapted as a function of the determined lane (34).

2. Method according to claim 1,
**characterised in that**
the first and the second group of the plurality of light diodes are actuated such that the first and second high beam distribution (26) extend along an angular region (α) around a main beaming direction of the headlamps (12) wherein the angular range (α) of the second high beam distribution (26) is smaller compared to the angular range (α) of the first high beam distribution (20).

3. Method according to claim 1 or 2,
**characterised in that**
the street class of the street on which the motor vehicle (10) is located is determined based on the speed of the vehicle (10).

4. Method according to any one of the preceding claims,
**characterised in that**
the street class of the street on which the motor vehicle (10) is located is determined based on the data of a navigation system.

5. Method according to any one of the preceding claims,
**characterised in that**
if a motorway (18) is determined as the street class, a physical separation (28) is also detected between the carriageways of the motorway (18) and the second group of the plurality of light diodes, which is actuated to provide the second high beam distribution (26), is adapted as a function of the physical separation (28) detected.

6. Method according to claim 5,
**characterised in that**
the lane (34) on which the motor vehicle (10) is located is determined by means of a camera based on road markings.

7. Headlamp (12) for a motor vehicle (10) comprising
- a plurality of light diodes,
- a control device (14) for receiving a request signal for a high beam operation,
- a detection device (16) for determining a street class of a street on which the motor vehicle (10) is located, wherein
- the control device (14) actuates a first group of the plurality of light diodes to provide a first high beam distribution (20) if a street class different to a motorway (18) is determined, and
- the control device (14) actuates a second group of the plurality of light diodes to provide a second high beam distribution (26) if a motorway (18) is determined as the street class, wherein the headlamp is configured to carry out a method according to any one of the preceding claims.

8. Motor vehicle (10) comprising at least one headlamp (12) according to claim 7.

## Revendications

1. Procédé de fonctionnement d'un projecteur (12) qui est destiné à un véhicule automobile (10) et qui comprend une multiplicité de diodes électroluminescentes, par
- réception d'un signal de demande pour un fonctionnement en mode lumière à longue portée,
- détermination d'une classe de route d'une route sur laquelle se trouve le véhicule automobile (10),
- commande d'un premier groupe de la multiplicité de diodes électroluminescentes pour fournir une première répartition de lumière à longue portée (20) avec le projecteur (12) si une classe de route différente d'une autoroute (18) est déterminée, et
- commande d'un deuxième groupe de la multiplicité de diodes électroluminescentes pour fournir une deuxième répartition de lumière à longue portée (26) avec le projecteur (12) si une autoroute (18) est déterminée comme classe de route, **caractérisé en ce que**
on commande le deuxième groupe de la multiplicité de diodes électroluminescentes en fait en désactivant des diodes électroluminescentes qui sont associées aux deux zones marginales (24) du projecteur (12) de telle sorte que, avec la deuxième répartition de lumière à longue portée (26), on fournit en comparaison de la première répartition de lumière à longue portée (20) une répartition de lumière plus étroite qui a pour conséquence que des usagers de la route sur des voies en sens contraire de l'autoroute (18) ne sont pas éblouis et qu'il est donc encore possible, pour le conducteur du véhicule automobile (10), d'activer la lumière à longue portée sur l'autoroute (18),
dans lequel, si une autoroute (18) est déterminée comme classe de route, on détermine en plus sur quelle file (34) de l'autoroute (18) se trouve le véhicule automobile (10), et on adapte le deuxième groupe de la multiplicité de diodes électroluminescentes qui est commandé pour fournir la deuxième répartition de lumière à longue portée (26) en fonction de la file (34) déterminée.

2. Procédé selon la revendication 1,
**caractérisé en ce que**
le premier et le deuxième groupe de la multiplicité de diodes électroluminescentes sont commandés de telle sorte que la première et la deuxième répartition de lumière à longue portée (26) s'étendent le long d'une plage angulaire (α) autour d'une direction de rayonnement principale du projecteur (12), la plage angulaire (α) de la deuxième répartition de lumière à longue portée (26) étant plus petite que la plage angulaire (α) de la première répartition de lumière à longue portée (20).

3. Procédé selon la revendication 1 ou 2,
**caractérisé en ce que**
la classe de route de la route sur laquelle se trouve le véhicule automobile (10) est déterminée à l'aide de la vitesse du véhicule automobile (10).

4. Procédé selon l'une des revendications précédentes,
**caractérisé en ce que**
la classe de route de la route sur laquelle se trouve le véhicule automobile (10) est déterminée à l'aide des données d'un système de navigation.

5. Procédé selon l'une des revendications précédentes,
**caractérisé en ce que**,
si une autoroute (18) est déterminée comme classe de route, on détecte en plus une séparation matérielle (28) entre les voies de l'autoroute (18) et on adapte le deuxième groupe de la multiplicité de diodes électroluminescentes, qui est commandé pour fournir la deuxième répartition de lumière à longue portée (26) en fonction de la séparation matérielle (28) détectée.

6. Procédé selon la revendication 5,
**caractérisé en ce que**
la file (34), sur laquelle se trouve le véhicule automobile (10), est déterminée au moyen d'une caméra à l'aide de marquages au sol.

7. Projecteur (12) pour un véhicule automobile (10) avec
- une multiplicité de diodes électroluminescentes,
- un dispositif de commande (14) pour recevoir un signal de demande pour un fonctionnement en mode lumière à longue portée,
- un dispositif de détection (16) pour déterminer une classe de route d'une route sur laquelle se trouve le véhicule automobile (10),
dans lequel
- le dispositif de commande (14) commande un premier groupe de la multiplicité de diodes électroluminescentes pour fournir une première répartition de lumière à longue portée (20), si une classe de route différente d'une autoroute (18) est déterminée, et
- le dispositif de commande (14) commande un deuxième groupe de la multiplicité de diodes électroluminescentes pour fournir une deuxième répartition de lumière à longue portée (26), si une autoroute (18) est déterminée comme classe de route, le projecteur étant conçu pour mettre en oeuvre un procédé selon l'une des revendications précédentes.

8. Véhicule automobile (10) avec au moins un projecteur (12) selon la revendication 7.
